# EUROPÄISCHE PATENTSCHRIFT

(11) **EP 3 665 313 B1**
(45) Veröffentlichungstag und Bekanntmachung des Hinweises auf die Patenterteilung: **09.12.2020**
(21) Anmeldenummer: 18804515.7
(22) Anmeldetag: 29.10.2018
(51) Int. Cl.: C22C 9/04, F16C 33/00

(54) **SONDERMESSINGLEGIERUNG UND SONDERMESSINGLEGIERUNGSPRODUKT**
SPECIAL BRASS ALLOY AND SPECIAL BRASS ALLOY PRODUCT
ALLIAGE DE LAITON SPÉCIAL AINSI QUE PRODUIT D'ALLIAGE DE LAITON SPÉCIAL

(43) Veröffentlichungstag der Anmeldung: 17.06.2020
(73) Patentinhaber: Otto Fuchs - Kommanditgesellschaft -, 58540 Meinerzhagen (DE)
(72) Erfinder: REETZ, Björn, 47800 Krefeld (DE); GUMMERT, Hermann, 51399 Burscheid (DE); PLETT, Thomas, 57392 Schmallenberg (DE)
(74) Vertreter: Haverkamp, Jens
(86) Internationale Anmeldenummer: PCT/EP2018/079587
(87) Internationale Veröffentlichungsnummer: WO 2020/088738

(56) Entgegenhaltungen:
- EP-B1- 3 269 835
- CN-A- 101 705 388
- DE-U1-202017 103 901

## Beschreibung

Die Erfindung betrifft eine Sondermessinglegierung sowie ein aus dieser Sondermessinglegierung hergestelltes Produkt.

Für typische Reibanwendungen in einer Schmiermittelumgebung werden generell niedrige Reibwerte der verwendeten Legierung gefordert, wobei zusätzlich der Reibwert in vorgegebenen Grenzen an die jeweilige Anwendung, insbesondere den Reibpartner, den verwendeten Schmierstoff und die Reibbedingungen, wie Anpressdruck und Relativgeschwindigkeit, anpassbar sein sollte. Dies gilt insbesondere für Kolbenbuchsen, auf die hohe statische und dynamische Lasten wirken. Des Weiteren fordern Anwendungen mit hohen Relativgeschwindigkeiten der Reibpartner, wie sie beispielsweise für Axiallager eines Turboladers vorliegen, Legierungen, die neben einer reduzierten Wärmeentwicklung auch eine gute Wärmeableitung von der Reibfläche sicherstellen.

Durch die Reibleistung und den Ölkontakt entsteht auf der Lagerfläche eine tribologische Schicht mit angelagerten Schmiermittelkomponenten. Dabei wird eine gleichmäßige und zugleich hohe Anlagerungsrate der Schmiermittelbestandteile und deren Abbauprodukte gefordert, um an der Gleitschicht eine hinreichend stabile Adsorptionsschicht zu erhalten.

Ferner zeichnet sich ein geeigneter Lagerwerkstoff zusätzlich durch eine breitbandige Ölverträglichkeit aus, sodass der Aufbau der tribologischen Schicht weitgehend unempfindlich gegen die Wahl bestimmter Öladditive ist. Eine weitere Zielsetzung besteht darin, eine Legierung für Reibanwendungen mit guten Notlaufeigenschaften anzugeben, sodass eine hinreichende Standzeit unter Trockenreibungsbedingungen sichergestellt werden kann.

Für reibbelastete Bauteile ist zusätzlich wichtig, dass die eingesetzte Legierung eine hinreichende Festigkeit aufweist. Entsprechend sollte eine hohe 0,2 %-Dehngrenze vorliegen, um die unter Last auftretenden plastischen Verformungen möglichst gering zu halten. Zusätzlich wird gefordert, eine besonders harte und zugfeste Legierung anzugeben, um deren Widerstand gegen abrasive und adhäsive Belastungen zu erhöhen. Zugleich wird eine ausreichende Zähigkeit als Schutz gegen stoßende Beanspruchungen verlangt. In diesem Zusammenhang wird gefordert, die Anzahl der Mikrodefekte zu verringern und das von diesen ausgehende Defektwachstum zu verlangsamen. Dies geht einher mit der Forderung, eine Legierung mit einer möglichst hohen Bruchzähigkeit anzugeben, die weitgehend frei von Eigenspannungen ist.

Geeignete Legierungen für reibbeanspruchte Bauteile sind vielfach Sondermessinge, die neben Kupfer und Zink als Hauptbestandteile eine Zulegierung wenigstens eines der Elemente Nickel, Eisen, Mangan, Aluminium, Silizium, Titan oder Chrom aufweisen. Dabei erfüllen insbesondere Siliziummessinge die voranstehend genannten Anforderungen, wobei CuZn31Si1 eine Standardlegierung für Reibanwendungen, etwa für Kolbenbuchsen, darstellt. Ferner ist bekannt, Zinnbronzen, die neben Zinn und Kupfer zusätzlich Nickel, Zink, Eisen und Mangan aufweisen, für Reibanwendung oder auch für den Bergbau einzusetzen.

Als Beispiel für eine Kupfer-Zink-Legierung, die sich für auf Gleitung beanspruchte Maschinenteile, wie Lager, Schneckenräder, Zahnräder, Gleitschuhe und dergleichen, eignet, wird auf CH 223 580 A verwiesen. Offenbart wird ein Kupfergehalt von 50 - 70 Gew.-% mit einer Zulegierung von 2 - 8 Gew.-% Aluminium, 0,05 - 3 % Silizium und 0,5 - 10 Gew.-% Mangan sowie Rest Zink. Zusätzlich kann die Legierung bis maximal 10 Gew.-% Blei sowie 0,1 - 5 Gew.-% eines oder mehrerer Elemente aus der Gruppe Eisen, Nickel und Kobalt aufweisen. Des Weiteren ist aus der EP 0 407 596 B1 eine Sondermessinglegierung bekannt, die neben Kupfer, Zink, Mangan, Aluminium und Silizium als optionale Legierungsbestandteile Eisen, Nickel und Kobalt aufweist. Zusätzlich wird ein Anteil von 0,03 - 1 Gew.-% Sauerstoff vorgesehen. Des Weiteren offenbart DE 15 58 467 A eine weitere Sondermessinglegierung, die für auf Gleitung und Reibung beanspruchte Gegenstände vorgesehen ist. Neben Kupfer und einem Zinkanteil, der bis 45 Gew.-% reichen darf, liegt eine Zulegierung von Mangan und Silizium sowie Tellur vor. Zusätzlich stellen Fe, Ni, Al und Be weitere optionale Legierungsbestandteile dar. Ferner beschreiben DE 15 58 817 B2 und DE 59 949 C1 Kupferlegierungen mit einer breitbandigen Zusammensetzung, die einen verschleißreduzierten Lagerwerkstoff bilden.

Um bestimmte Eigenschaften eines aus einer Sondermessinglegierung hergestellten Produktes zu erreichen, werden Legierungen mit unterschiedlichen Legierungselementen eingesetzt. Für derartige Bauteile ist es somit erforderlich, entsprechend unterschiedliche Produkte zu bevorraten und vor allem auch den Umgang mit diesen unterschiedlichsten Legierungen zu beherrschen.

JP 2001-355029 A offenbart einen Synchronring und somit ein Bauteil, das auf zeitlich variable Reib-Belastung ausgelegt ist. Hergestellt wird dieses Bauteil durch folgende Schritte: Gießen eines Rohlings, Warm-Strangpressen eines Rohres, Herausschneiden eines Ringes, Warm-Schmieden und anschließendes maschinelles Bearbeiten. Der Synchronring ist aus einer Sondermessinglegierung gefertigt, die 62,46% Cu, 30,8% Cn sowie 0,053% Cr, Rest Zn enthält.

Weber et al.: "Neuer Pb-freier Kupferwerkstoff für Gleitlageranwendungen in Verbrennungsmotoren und Getrieben", Metall: Fachzeitschrift für Metallurgie; Technik, Wissenschaft, Wirtschaft, GDMB-Verlag, Band 63, Nr. 11, Seiten 564-567 (1. November 2009) offenbart ein Gleitlager aus einer Sondermessinglegierung mit folgender Zusammensetzung: 58% Cu, 0,5% Pb, 1% Si, 2% Mn, 0,5% Ni, 0,5% Fe, 2% Al, Rest Zn.

Eine weitere Sondermessinglegierung, die sich durch hohe Festigkeiten, eine verbesserte Verschleißbeständigkeit unter Reibbelastung sowie guten Notlaufeigenschaften bei Mangelschmierung auszeichnet ist aus EP 3 269 835 B1 bekannt. Bei dieser Sondermessinglegierung handelt es sich um eine Legierung mit 60 bis 62 Gew.-% Cu, 2,1 bis 2,5 Gew.-% Mn, 0,2 bis 0,6 Gew.-% Ni, 2,9 bis 3,1 Gew.-% Al, 0,35 bis 0,65 Gew.-% Si, ≤ 0,1 Gew.-% Fe, ≤ 0,1 Gew.-% Sn, ≤ 0,1 Gew.-% Pb, Rest Zn nebst unvermeidbaren Verunreinigungen. Die aus dieser Sondermessinglegierung hergestellten Produkte zeichnen sich durch längliche intermetallische Phasen im Gefüge aus, die den Legierungsprodukten einen hohen mechanischen Verschleißwiderstand verleihen. Beim Strangpressen neigen diese intermetallischen Phasen zu einer guten Längsausrichtungsneigung. Dabei haben die längliche Ausbildung der intermetallischen Phasen, vor allem der Mn-Silizide die Funktion, die Matrix gegenüber verschleißender Belastung zu schirmen. Die sich einstellende Korngröße der β-Phase bzw. β-phasendominierten Matrix liegt zwischen 100 und 300 µm. Damit sind die aus dieser Legierung hergestellten Produkte relativ grobkörnig, was jedoch für den Spanbruch bei einer zerspanenden Bearbeitung eines aus dieser Legierung hergestellten Halbzeuges vorteilhaft sein kann.

Auch wenn diese vorbekannte Legierung positive Eigenschaften aufweist, wird das sich einstellende relativ grobe Korn mitunter auch als nachteilig angesehen, da beim Kaltumformen Korngrenzenrisse auftreten können. Auch wenn sich die aus dieser Legierung hergestellten Halbzeuge mechanisch gut bearbeiten lassen, wäre es wünschenswert, wenn die verbleibende Oberflächenrauigkeit in Folge einer mechanischen, insbesondere spanenden Bearbeitung geringer wäre, um einen Bearbeitungsmehraufwand durch nachträgliches Polieren oder einer vergleichbaren Oberflächenbearbeitung zu vermeiden, wenn das Sondermessinglegierungsprodukt nur eine geringe Oberflächenrauigkeit aufweisen soll. Überdies hat sich herausgestellt, dass diese Sondermessinglegierungsprodukte bzw. -halbzeuge einer relativ starken thermischen Relaxation unterworfen sind. Dieses hat zur Folge, dass unter Umständen einzuhaltende Prozessfenster, etwa für ein thermisches Entspannen sehr eng gehalten werden müssen. Überdies kann dieses thermische Relaxationsverfahren dieser Legierung bei Einsatz von Produkten, die höheren Temperaturen und insbesondere auch höheren Temperaturschwankungen unterworfen sind, zu einer Festigkeitsverringerung führen.

Ausgehend von diesem diskutierten Stand der Technik liegt der Erfindung daher die Aufgabe zu Grunde, eine Sondermessinglegierung sowie ein aus dieser Legierung hergestelltes Sondermessinglegierungsprodukt vorzuschlagen, die vom Typ her ähnlich der aus EP 3 269 835 B1 vorbekannten Legierung ist, jedoch hinsichtlich der Korngröße sowie des thermischen Relaxationsverhaltens verbessert ist.

Gelöst wird diese Aufgabe erfindungsgemäß durch eine Sondermessinglegierung mit
62,5 bis 65 Gew.-% Cu,
2,0 bis 2,4 Gew.-% Mn,
0,7 bis 0,9 Gew.-% Ni,
1,9 bis 2,3 Gew.-% Al,
0,35 bis 0,65 Gew.-% Si,
0,3 bis 0,6 Gew.-% Fe,
0,18 bis 0,4 Gew.-% Sn und Cr einzeln oder gemeinsam,
≤ 0,1 Gew.-% Pb,
und Rest Zn nebst unvermeidbaren Verunreinigungen

Diese Sondermessinglegierung zeichnet sich durch eine sehr homogene und feinkörnige Gefügestruktur aus, die sich bereits bei dem ersten urgeformten Halbzeug - einem Gussling oder einem Strangpressling - einstellt. Die durchschnittliche Korngröße beträgt 40 bis 150 µm. Der Guss der Legierung führt zu einer noch feineren Korngröße. Von Besonderheit ist zudem, dass diese Sondermessinglegierung bereits in diesem Halbzeug ein α-β-Gefüge aufweist, wobei die α-Phase gitter- bzw. leistenartig in der β-Phase eingelagert ist bzw. diese durchdringt. Die Partikel der α-Phase verbinden auf diese Weise die Körner der β-Matrix mit dem Ergebnis, dass der Kornverbund intensiv durch α-Phase durchsetzt und damit auch bei Kaltumformungsbelastungen erhalten bleibt. Interessant bei dieser Legierung ist, dass sich dieses Gefüge selbst bei einem Strangpressling ohne eine Vorzugsrichtung einstellt und somit in Längs- sowie in Querrichtung des gepressten Stutzens ein gleiches bzw. quasi gleiches Gefüge zu beobachten ist. Folglich sind die Korngrenzen bei dem Gefüge eines aus dieser Sondermessinglegierung hergestellten Sondermessinglegierungsproduktes, was durchaus ein Halbzeug sein kann, im Unterschied zu der aus EP 3 269 835 B1 vorbekannten Legierung, deren Gefüge mit einem Anteil an α-Phase von typischerweise deutlich weniger als 10 % eine weitaus überwiegende β-Phase aufweist und bei der α-Phase allenfalls im Bereich der Korngrenzen oder innerhalb der β-Phase angeordnet sind, keine Schwachstellen darstellen. Hierin liegt die Korngrenzenrissunanfälligkeit dieser neuen Legierung beim Kaltumformen begründet. Zudem sind hierdurch Festigkeitsverringerungen bei Einsatz derartiger Sondermessinglegierungsprodukte unter höheren Temperaturen oder auch unter Einfluss von Temperaturwechseln vermieden bzw. gegenüber der vorgenannten Legierung erheblich reduziert, und zwar zusammen mit der erzielten Feinkörnigkeit.

Es war überraschend, festzustellen, dass sich durch eine relativ geringe Änderung in der Legierungszusammensetzung gegenüber der aus EP 3 269 835 B1 bekannten derartige signifikante Unterschiede im Gefüge und damit die mit dieser Legierung erzielten Vorteile realisieren lassen. Nicht vorhersehbar war, dass durch eine geringe Veränderung des Zinkäquivalents dieser Sondermessinglegierung gegenüber dem aus EP 3 269 835 B1 bekannten um etwas mehr α-Phase zu erzielen, solch signifikante Änderungen im Sondermessinglegierungsprodukt zufolge haben würde. Es ist somit das vom Ergebnis her unerwartete Zusammenspiel der am Aufbau der Legierung beteiligten Elemente bereits beim Urformen - Guss oder Strangpressen - was den positiven Eigenschaften dieser Sondermessinglegierung bzw. des daraus hergestellten Produktes oder Halbzeuges führt. Hierzu zählt auch eine geringe thermische Relaxation, sodass Prozessfenster für ein thermisches Entspannen entsprechend großzügig bemessen werden können.

Bemerkenswert ist bei dieser Sondermessinglegierung, wie bereits angedeutet, wenn diese zum Herstellen eines Halbzeuges stranggepresst wird, dass Gefügeunterschiede zwischen dem Kern und der Randzone des gepressten Produktes nicht zu erkennen sind. Interessanter Weise ist die gitterartig die β-Phase durchdringende α-Phase sowohl in Längserstreckung sowie in Quererstreckung des gepressten Produktes hinsichtlich ihrer Längsachsenorientierung nicht, jedenfalls nicht nennenswert unterschiedlich ausgebildet, so dass die die β-Phase durchdringende α-Phase in den gepressten Produkten keine Vorzugsrichtung aufweist. Ein solcher Pressling kann daher, ohne Rücksicht auf eine bevorzugte Gefügeerstreckung berücksichtigen zu müssen, bearbeitet werden. Ein beispielsweise zum Schmieden vorgesehener Abschnitt eines stranggepressten Stutzens kann somit unabhängig von der Strangpressrichtung umgeformt werden. Von besonderem Vorteil ist ferner, dass die in der α-β-Matrix eingelagerten intermetallischen Verbindungen - die Silizide - im Unterschied zu dem langgestreckten Habitus der aus EP 3 269 835 B1 bekannten Sondermessinglegierung einen eher rundlichen, globularen, allenfalls einen nur geringfügig länglichen Habitus aufweisen, mithin ebenfalls keine Vorzugsrichtung, allenfalls eine nur geringe Streckung aufweisen. Und daher beim Umformen auch nicht zerbrechen.

Die Einfluss auf die Kornfeinung nehmenden Elemente Sn und Cr sind einzeln oder gemeinsam mit 0,18 bis 0,4 Gew.-% an der Legierung beteiligt. Gemäß einem Ausführungsbeispiel ist vorgesehen, dass die Legierung nur Sn und kein Cr enthält. Der Sn-Anteil beträgt vorzugsweise 0,2 bis 0,3 Gew.-%. In einer anderen Ausgestaltung enthält die Legierung kein Sn dafür jedoch Cr mit Anteil von vorzugsweise 0,2 bis 0,27 Gew.-%. Ein über 0,4 Gew.-% hinausgehender Anteil dieser Elemente führt zu keinen nennenswerten Verbesserungen. Neben Sn und Cr trägt auch der Fe-Gehalt zur Kornfeinung bei. Bei Einsatz von Sn hat dieses zudem positive Eigenschaften auf die Ausbildung einer Passivierungsschicht auf der Oberfläche des aus der Legierung hergestellten Sondermessinglegierungsproduktes, sodass dessen tribologische Eigenschaften verbessert sind.

Die aus dieser Sondermessinglegierung hergestellten Halbzeuge zeichnen sich durch eine gute Kaltumformbarkeit aus. Somit können aus dieser Sondermessinglegierung auch Produkte, wie beispielsweise Gleitschuhe hergestellt werden, zu deren Herstellung eine nicht unbeträchtliche Umformrate benötigt wird. Bei Gleitschuhen ist es beispielsweise erforderlich, das Halbzeug nach dem Schmieden zur Ausbildung eines Kragens bördeln zu können. Trotz dieser guten Kaltumformbarkeit ist dieser Werkstoff hinreichend hart, um den an einen solchen Gleitschuh im Einsatz gestellten Anforderungen, mithin der gewünschten Standfestigkeitszeit zu genügen.

Die thermische Relaxaktionsbeständigkeit wird durch das feinkörnige Gefüge und die bereits vorbeschriebe α-β-Matrix erreicht. Diesbezüglich macht sich ebenfalls positiv bemerkbar, dass die Körner der Matrix keine Einregelung und damit keine Vorzugsrichtung aufweisen.

Bemerkenswert ist bei dieser Legierung auch, dass ihre elektrische Leitfähigkeit um etwa 10 % gegenüber der aus EP 3 269 835 B1 bekannten Legierung reduziert ist. Entsprechend geringere Korrosionsströme können fließen, sodass auf diese Weise auch die Korrosionsbeständigkeit verbessert ist.

Der Anteil der α-Phase in einem Gussling oder einem Strangpressling beträgt etwa 40 bis 60 %. Dass ein solcher Anteil an α-Phase im Gussling oder im Strangpressling vorliegt, ist unerwartet, da bei der Vergleichslegierung gemäß EP 3 269 835 B1 der Anteil an α-Phase in diesem Legierungszustand nur maximal 10 % beträgt, typischerweise jedoch deutlich unter 10 % liegt. Der in den vorbenannten Grenzen etwa gleiche Anteil an α-Phase und β-Phase stellt einen guten Ausgangspunkt dar, um in Abhängigkeit von der gewünschten Gefügezusammensetzung im Endprodukt den Anteil an α-Phase durch Warmbehandlungsschritte, wie etwa Glühen verringern oder auch erhöhen zu können. Durch eine Warmbehandlung des Legierungsproduktes bei geringerer Temperatur, typischerweise im Bereich zwischen 270 °C und 290 °C für 4,5h bis 6 h kann der Anteil an α-Phase deutlich reduziert werden, und zwar bis auf 20 % bis 25 % bei diesen Warmbehandlungsparametern. Eine Warmbehandlung bei höherer Temperatur, beispielsweise zwischen 435°C und 460°C für etwa 2,5h bis 3,5 h führt zu einer Erhöhung des Anteils an α-Phase. Auf diese Weise können Sondermessinglegierungsprodukte hergestellt werden, die einen Anteil an α-Phase von 70 bis 75 % aufweisen. Insofern kann der im Endprodukt tatsächlich gewünschte Anteil an α-Phase individuell und unabhängig von dem Urformen eingestellt werden.

Diese positiven verschleißbeständigen Eigenschaften eines aus dieser Legierung hergestellten Produktes zeigen sich bereits in der Härte. Nach dem Strangpressen weist das Halbzeug eine Härte zwischen 135 und 145 HB [2,5/62,5] auf. Durch eine der Umformung nachfolgende Wärmebehandlung kann die Härte auf Werte von mehr als 160 HB erhöht werden, wenn das Werkstück bei den vorbeschriebenen höheren Temperaturen und der kürzeren Behandlungsdauer warm behandelt wird.

Diese Sondermessinglegierung enthält bevorzugt 63 bis 64 Gew.-% Cu, 2,1 bis 2,2 Gew.-% Mn, 2,0 bis 2,2 Gew.-% Al und 0,4 bis 0,5 Gew.-% Fe.

Nachfolgend ist die Erfindung anhand von Ausführungsbeispielen unter Bezugnahme auf die beiliegenden Figuren erläutert. Es zeigen:
- **Fig. 1a bis 1d:**: Mikroaufnahmen einer stranggepressten Probe im Presszustand aus einer ersten erfindungsgemäßen Sondermessinglegierung,
- **Fig. 2:**: Mikroaufnahmen aus der Probe der Legierung der Figur 1 in einem Längs- und Querschliff in Gegenüberstellung zu Mikroaufnahmen einer zweiten erfindungsgemäßen Sondermessinglegierung,
- **Fig. 3:**: Längsschliffdetailaufnahmen der ersten Sondermessinglegierung gemäß der Erfindung in einer Gegenüberstellung zu einer Vergleichsprobe,
- **Fig. 4:**: Längsschliffdetailaufnahmen der zweiten Sondermessinglegierung gemäß der Erfindung in einer Gegenüberstellung zu einer Vergleichsprobe,

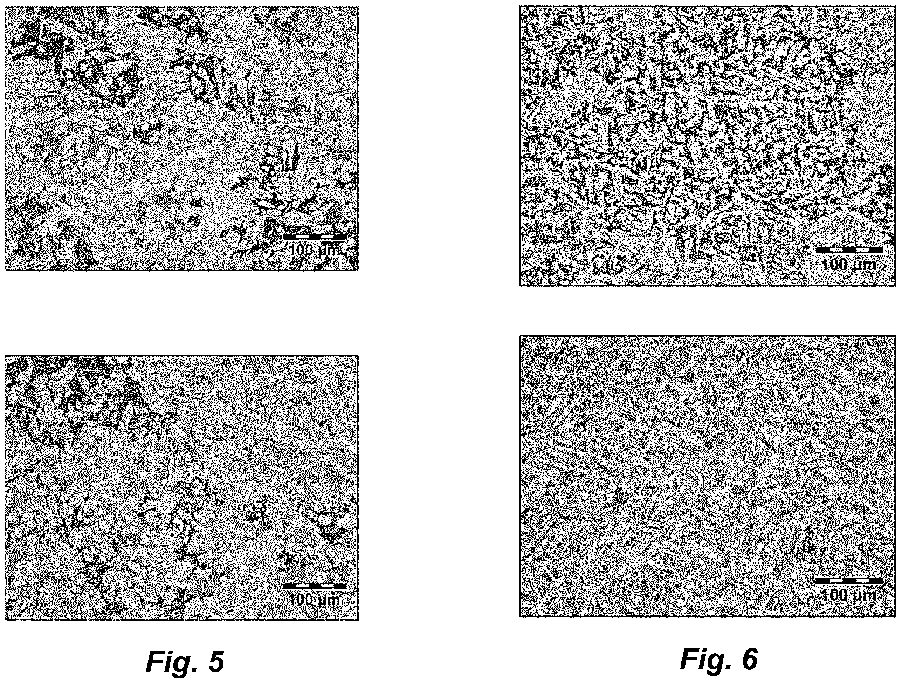

- **Fig. 5:**: eine Mikroaufnahme eines aus der ersten erfindungsgemäßen Sondermessinglegierung hergestellten Gleitschuhs,
- **Fig. 6:**: eine Mikroaufnahme eines aus der ersten erfindungsgemäßen Sondermessinglegierung hergestellten gedrehten Buchse,
- **Fig. 7:**: Mikrogefügebilder eines aus der ersten erfindungsgemäßen Sondermessinglegierung durch Schmieden geformtes Haltesegment nach dem Schmieden,
- **Fig. 8:**: Mikrogefügebilder eines aus der ersten erfindungsgemäßen Sondermessinglegierung durch Schmieden geformtes Haltesegment nach einer dem Schmieden nachgeschalteten Warmbehandlung (Glühen),
- **Fig. 9:**: Mikrogefügebilder eines aus der ersten erfindungsgemäßen Sondermessinglegierung durch Schmieden geformten Gleitschuhs nach dem Schmieden und
- **Fig. 10:**: Mikrogefügebilder eines aus der ersten erfindungsgemäßen Sondermessinglegierung durch Schmieden geformten Gleitschuhs nach einem dem Schmieden nachgeschalteten Warmbehandlung (Glühen),

Aus zwei erfindungsgemäßen Sondermessinglegierungen und einer Vergleichslegierung wurden Proben hergestellt und anschließend bei etwa 700 °C stranggepresst. Die Zusammensetzungen der Probe V der Vergleichslegierung und der beiden Proben E1, E2 aus der erfindungsgemäßen Sondermessinglegierung sind nachfolgend wiedergegeben (Angaben in Gew.-%):

| | V | E1 | E2 |
|---|---|---|---|
| Cu | 61 | 63,5 | 63,7 |
| Mn | 2,3 | 2,2 | 2,0 |
| Ni | 0,4 | 0,73 | 0,73 |
| Al | 3,0 | 2,2 | 2,1 |
| Si | 0,6 | 0,6 | 0,49 |
| Fe | 0,05 | 0,49 | 0,5 |
| Sn | - | 0,22 | - |
| Pb | 0,05 | ≤ 0,1 | ≤ 0,1 |
| Cr | 0,013 | - | 0,21 |
| Zn | Rest | Rest | Rest |

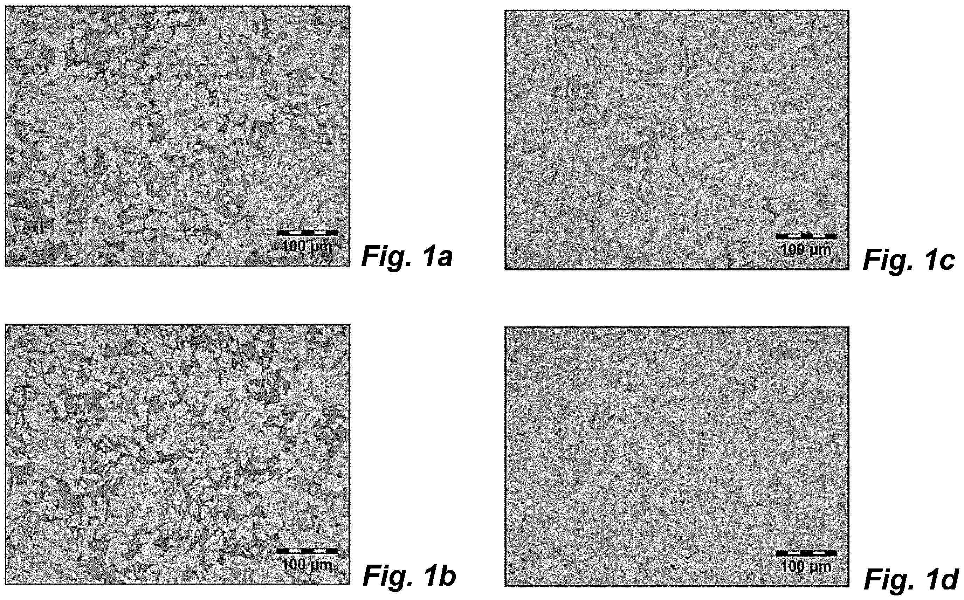

Bei der Vergleichslegierung handelt es sich um die in EP 3 269 835 B1 im Ausführungsbeispiel beschriebene Sondermessinglegierung. Bei der Probe E1 handelt es sich um eine erste Sondermessinglegierung gemäß der Erfindung, die die Sn-haltige Variante der erfindungsgemäßen Sondermessinglegierung repräsentiert. Figur 1 zeigt Mikroaufnahmen dieser Legierung im Presszustand, entnommen in Längsrichtung des gepressten Stutzens (Figuren 1a und 1b) sowie in Querrichtung dazu (Figur 1c, 1d). Die Figuren 1a und 1c sind dem Kern, die Figuren 1b und 1d der radialen Randzone entnommen. Während die Proben 1a und 1b in Längsrichtung des gepressten Stutzens entnommen worden sind, sind die Proben 1c und 1d in Querrichtung dazu entnommen. Auffällig ist, dass die Gefügestruktur sowohl vom Kern zum Rand hin als auch in Längs- und in Querrichtung homogen ist. Diese Mikroaufnahmen zeigen zudem das für diese Legierung typische α-β-Gefüge, bei dem die α-Phase (helle Körner) die β-Körner gitter- bzw. leistenförmig durchsetzt.

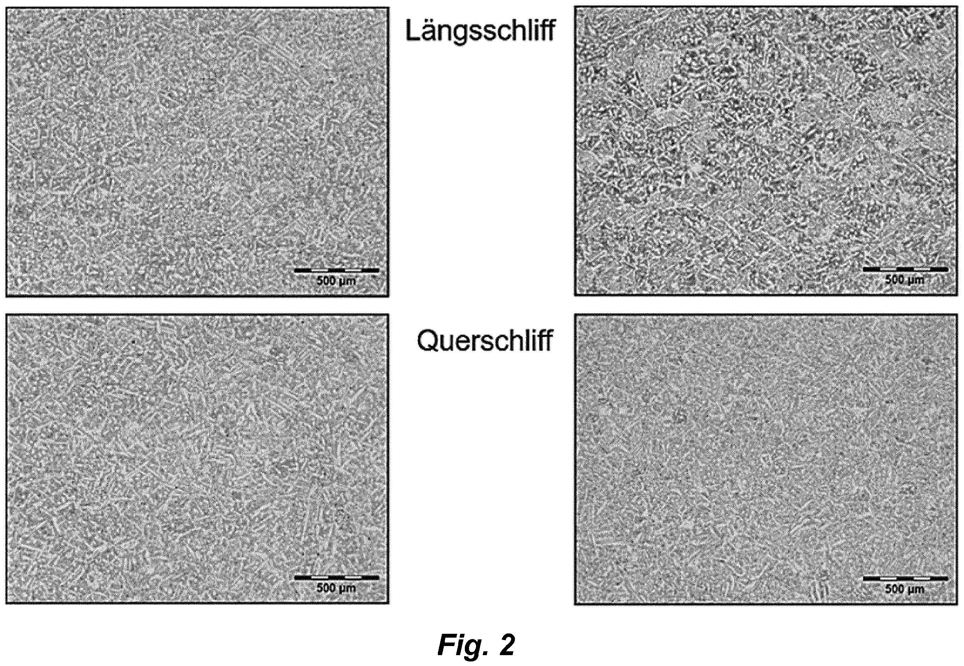

Deutlich wird diese besondere Gefügestruktur im gepressten Stutzen auch aus den mit geringerer Vergrößerung gezeigten Mikroaufnahmen der Figur 2. In dieser Figur ist die Probe E1 links und die Probe E2 rechts mit ihrem Gefüge gezeigt. Bei der Probe E2 handelt es sich um die Cr-haltige Variante der erfindungsgemäßen Sondermessinglegierung. Das jeweils obere Bildpaar zeigt das Gefüge in Längserstreckung des gepressten Stutzens (des Presslings). Das untere Bildpaar der Figur 2 zeigt das Gefüge in Querrichtung. Auch diesen Mikroaufnahmen ist die interessanterweise sehr homogene Gefügeausbildung in Längs- und in Querrichtung der Proben E1, E2 erkennbar. Auch in diesen Mikroaufnahmen ist die α-Phase der hellere Bestandteil.

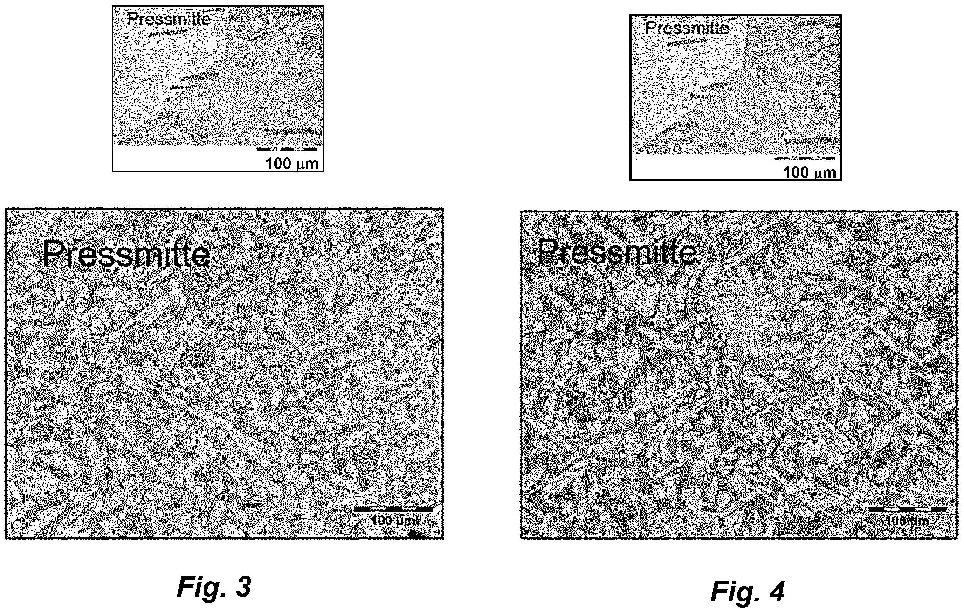

Figuren 3 und 4 zeigen jeweils in einer Gegenüberstellung Mikroaufnahmen der Probe E1 gegenübergestellt einer Mikroaufnahme der Probe V (Figur 3) sowie der zweiten erfindungsgemäßen Probe E2 in einer Gegenüberstellung mit einer Mikroaufnahme der Probe der Vergleichslegierung V (Figur 4). Diese Gegenüberstellungen verdeutlichen die gegenüber der Vergleichslegierung signifikant unterschiedliche Gefügeausbildung der erfindungsgemäßen Sondermessinglegierung. Während die Vergleichslegierung in dem Bearbeitungszustand "gepresster Stutzen" ausschließlich β-Phase zeigt, ist in den erfindungsgemäßen Legierungen die von der α-Phase durchsetzte β-Phase erkennbar, wobei sich die Körner der α-Phase über die Korngrenzen aneinandergrenzender β-Phasen-Körnern hinwegerstrecken.

Die aus der erfindungsgemäßen Sondermessinglegierung urgeformten Halbzeuge, etwa als stranggepresster Stutzen, weisen einen Anteil an α-Phase von etwa 35 bis 55 %, insbesondere zwischen etwa 40 % und etwa 50 % auf. Der α-Phasenanteil in den erfindungsgemäßen Proben E1 und E2 liegt bei jeweils etwa 45 %. Den Rest bildet die β-Phase. Der Anteil intermetallischer Phasen liegt bei etwa 3 %.

Bei den erfindungsgemäßen Sondermessinglegierungen dient die legierungsbedingt vorbeschriebene Gefügeausbildung nicht lediglich den erörterten thermischen und mechanischen Zwecken. Vielmehr eignet sich diese Gefügeausbildung mit der homogenen Verteilung der α-Phase und der β-Phase, um in Abhängigkeit von den an das fertige Produkt gestellten Anforderungen den Anteil der α-Phase einstellen zu können. Dieses kann durch eine Wärmebehandlung (Glühen) vorgenommen werden. Wird das Halbzeug einem Glühen mit geringerer Temperatur, jedoch längerer Behandlungsdauer unterworfen, wird der Anteil an α-Phase reduziert. Um dieses zu erreichen wird das Halbzeug bei Temperaturen zwischen 260 °C und 300 °C für 4h bis 6h, insbesondere bei etwa 280 °C für 5h behandelt. Bei einer Durchführung der Wärmebehandlung mit diesen Parametern kann der Anteil der α-Phase auf 30 % und weniger reduziert werden.

Wird die Wärmebehandlung hingegen bei höherer Temperatur für eine kürzere Zeit durchgeführt, wird der Anteil der α-Phase gegenüber dem Anteil in dem gepressten Stutzen erhöht. Diese Wärmebehandlung wird bei Temperaturen zwischen 430 °C und 470 °C für 2,5h bis 4h, insbesondere bei einer Temperatur von etwa 450 °C für 3h durchgeführt. Der Anteil an α-Phase kann dann auf 65 % und mehr erhöht werden.

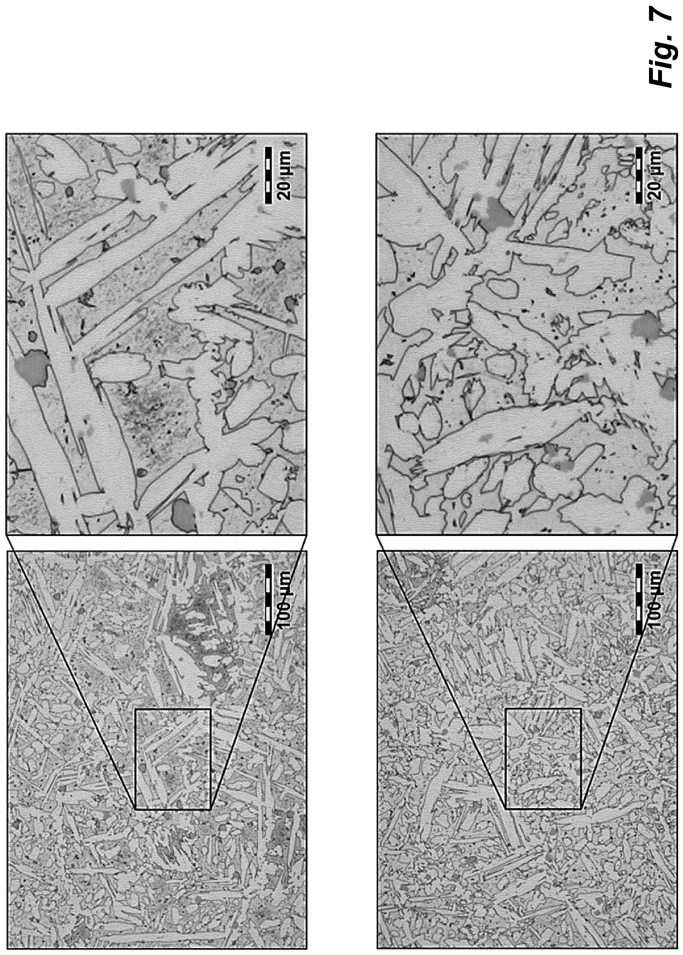

Eine Erniedrigung des Anteils an α-Phase führt zu einer gewissen Erhöhung des Anteils intermetallischer Phasen, die anteilsmäßig bei derartig geglühten Produkten dann einen Anteil von 4,5 % bis 5,5 % aufweisen können. Die erfindungsgemäße Sondermessinglegierung eignet sich in besonderer Weise, wozu auch das homogene Strangpressgefüge beiträgt, um gepresste Stutzensegmente durch Schmieden umzuformen. Figur 7 zeigt ein geschmiedetes Haltesegment aus der Probe E1. Das Schmieden ist bei 700 °C durchgeführt worden. Auch nach dem Schmieden ist, wie in den Mikrogefügebildern der Figur 7 erkennbar, die ursprüngliche Gefügeausbildung vom Grundsatz her noch erkennbar und somit erhalten geblieben.

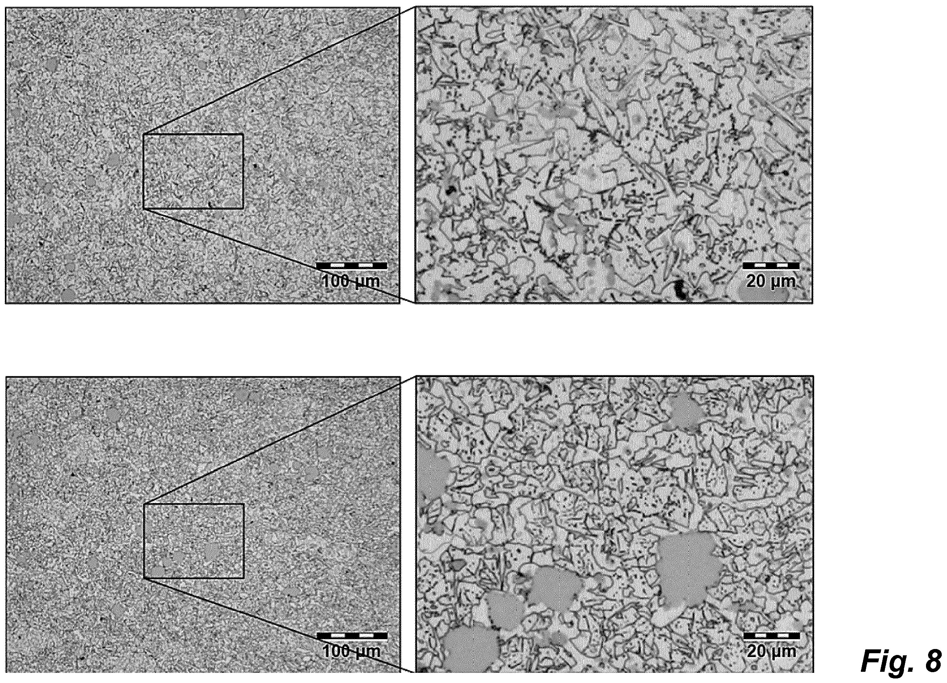

Figur 8 zeigt das Haltesegment nach Durchführen einer Wärmebehandlung bei 280 °C für 5h. Die Wärmebehandlung hat zu einer weiteren Homogenisierung des Gefüges beigetragen. Bei dieser Wärmebehandlung wurde der Anteil an α-Phase von etwa 40 % nach dem Schmieden durch die Wärmebehandlung auf etwa 29 % reduziert. Zudem wurde die Härte von etwa 140 HB [HBW 2,5/62,5] auf etwa 148 HB erhöht.

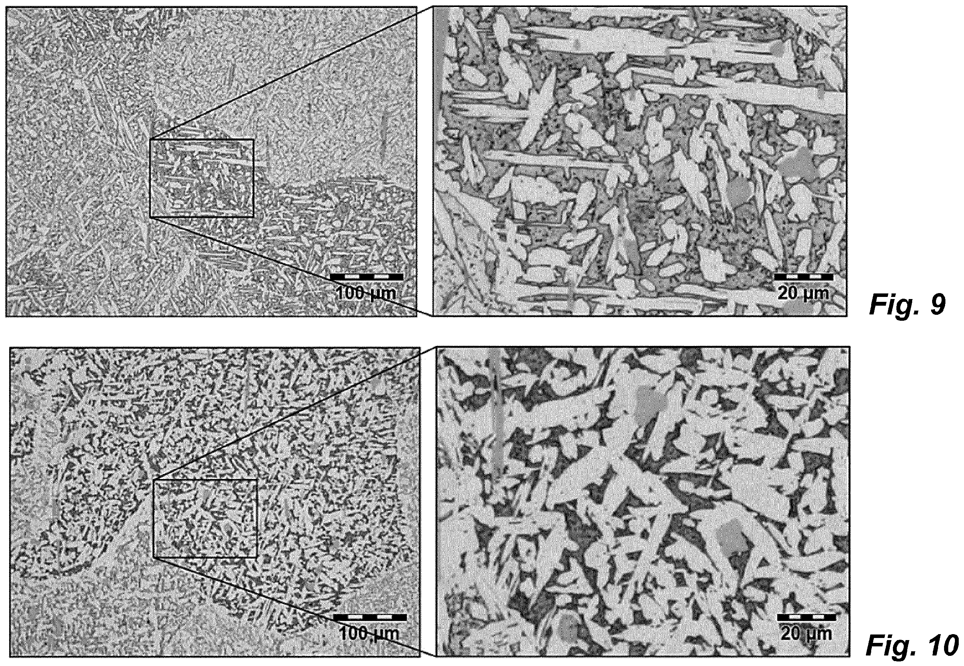

Aus der Probe E1 wurde durch Schmieden ferner ein Gleitschuh hergestellt. Figur 9 zeigt das Gefüge nach dem Schmiedeschritt, der bei 710 °C durchgeführt worden ist. Die im gepressten Stutzen eingestellte Gefügestruktur ist auch bei dieser Probe trotz Schmiedens vom Grundsatz her erhalten geblieben. Der geschmiedete Gleitschuh wurde anschließend bei 450 °C für 3h wärmebehandelt. Figur 10 zeigt das durch den Glühschritt der Anteil an α-Phase erhöht worden ist, und zwar von etwa 50 % nach dem Schmieden, welches dem α-Phasenanteil in dem gepressten Stutzen entspricht, auf etwa 68 %. Die Härte HB wurde durch das Glühen nur geringfügig gegenüber der Härte nach dem Schmieden angehoben, und zwar von 155 HB [HBW 2,5/62,5] auf 159 HB.

Bei der Probe V der Vergleichslegierung enthielt die Matrix des gepressten Stutzens einen Anteil an α-Phase von < 1 %.

Von Interesse bei der erfindungsgemäßen Sondermessinglegierung ist, dass diese eine gegenüber der Probe V der Vergleichslegierung um etwas mehr als 10 % geringere elektrische Leitfähigkeit aufweisen. Während diese bei der Vergleichslegierung 10,4 bis 10,7 MS/m beträgt, beträgt diese bei der erfindungsgemäßen Legierung E1 nur 8,8 MS/m. Dieses verbessert die Korrosionsbeständigkeit dieser Sondermessinglegierung.

Die mechanischen Kennwerte der Proben E1 und E2 sind der nachfolgenden Tabelle zu entnehmen:

| | Zugfestigkeit Rm [N/mm²] | Bruchdehnung As [%] | 0,2 %-Dehngrenze **R_{p0,2}** [N/mm²] |
|---|---|---|---|
| E1 | 550 | 18 | 250 |
| E2 | 545 | 21 | 243 |

## Patentansprüche

1. Sondermessinglegierung mit
62,5 bis 65 Gew.-% Cu,
2,0 bis 2,4 Gew.-% Mn,
0,7 bis 0,9 Gew.-% Ni,
1,9 bis 2,3 Gew.-% Al,
0,35 bis 0,65 Gew.-% Si,
0,3 bis 0,6 Gew.-% Fe,
0,18 bis 0,4 Gew.-% Sn und Cr einzeln oder gemeinsam,
≤ 0,1 Gew.-% Pb,
und Rest Zn nebst unvermeidbaren Verunreinigungen.

2. Sondermessinglegierung nach Anspruch 1, **dadurch gekennzeichnet, dass** diese 63 bis 64 Gew.-% Cu enthält.

3. Sondermessinglegierung nach Anspruch 1 oder 2, **dadurch gekennzeichnet, dass** diese 2,1 bis 2,2 Gew.-% Mn enthält.

4. Sondermessinglegierung nach Anspruch 1 oder 3, **dadurch gekennzeichnet, dass** diese 2,0 bis 2,2 Gew.-% Al enthält.

5. Sondermessinglegierung nach einem der Ansprüche 1 bis 4, **dadurch gekennzeichnet, dass** diese 0,4 bis 0,5 Gew.-% Fe enthält.

6. Sondermessinglegierung nach einem der Ansprüche 1 bis 4, **dadurch gekennzeichnet, dass** diese 0,2 bis 0,3 Gew.-% Sn oder 0,2 bis 0,27 Gew.-% Cr enthält.

7. Sondermessinglegierungsprodukt mit einer Legierungszusammensetzung nach einem der Ansprüche 1 bis 5, **dadurch gekennzeichnet, dass** das Sondermessinglegierungsprodukt ein Warmschmiedeteil ist und eine α-β-Mischkristallmatrix mit einem Anteil an α-Phase von 35 % bis 55 % sowie einen Anteil intermetallischer Phasen von 2 % bis 5 % aufweist.

8. Sondermessinglegierungsprodukt nach Anspruch 7, **dadurch gekennzeichnet, dass** das Sondermessinglegierungsprodukt ein auf Gleitung beanspruchtes Produkt, insbesondere ein Gleitschuh oder eine Lagerbuchse ist.

## Claims

1. Special brass alloy with
62.5 to 65 % by weight Cu,
2.0 to 2.4 % by weight Mn,
0.7 to 0.9 % by weight Ni,
1.9 to 2.3 % by weight Al,
0.35 to 0.65 % by weight Si,
0.3 to 0.6 % by weight Fe,
0.18 to 0.4 % by weight Sn and Cr, individually or together,
≤ 0.1 % by weight Pb,
and the remainder Zn as well as unavoidable impurities.

2. Special brass alloy according to claim 1, **characterised in that** this contains 63 to 64 % by weight Cu.

3. Special brass alloy according to claim 1 or 2, **characterised in that** this contains 2.1 to 2.2 % by weight Mn.

4. Special brass alloy according to any claim 1 or 3, **characterised in that** this contains 2.0 to 2.2 % by weight Al.

5. Special brass alloy according to any one of claims 1 to 4, **characterised in that** this contains 0.4 to 0.5 % by weight Fe.

6. Special brass alloy according to any one of claims 1 to 4, **characterised in that** this contains 0.2 to 0.3 % by weight Sn or 0.2 to 0.27 % by weight Cr.

7. Special brass alloy product with an alloy composition according to any one of claims 1 to 5, **characterised in that** the special brass alloy product is a hot-forged component and exhibits an α-β mixed crystal matrix with an α-phase proportion of 35% to 55% and a proportion of intermetallic phases of 2% to 5%.

8. Special brass alloy product according to claim 7, **characterised in that** the special brass alloy product is a product subject to sliding stress, in particular a sliding shoe or bearing bushing.

## Revendications

1. Alliage en laiton spécial comportant
62,5 à 65 % de poids de Cu,
2,0 à 2,4 % de poids de Mn,
0,7 à 0,9 % de poids de Ni,
1,9 à 2,3 % de poids d'Al,
0,35 à 0,65 % de poids de Si,
0,3 à 0,6 % de poids de Fe,
0,18 à 0,4 % de poids de Sn et de Cr, unitairement ou ensemble,
≤ 0,1 % de poids de Pb,
et le reste de Zn, auxquels s'ajoutent les inévitables impuretés.

2. Alliage en laiton spécial selon la revendication 1, **caractérisé en ce que** celui-ci contient 63 à 64 % de poids de Cu.

3. Alliage en laiton spécial selon la revendication 1 ou 2, **caractérisé en ce que** celui-ci contient 2,1 à 2,2 % de poids de Mn.

4. Alliage en laiton spécial selon la revendication 1 ou 3, **caractérisé en ce que** celui-ci contient 2,0 à 2,2 % de poids d'Al.

5. Alliage en laiton spécial selon l'une des revendications 1 à 4, **caractérisé en ce que** celui-ci contient 0,4 à 0,5 % de poids de Fe.

6. Alliage en laiton spécial selon l'une des revendications 1 à 4, **caractérisé en ce que** celui-ci contient 0,2 à 0,3 % de poids de Sn ou 0,2 à 0,27 % de poids de Cr.

7. Produit en alliage en laiton spécial dont l'alliage est composé selon l'une des revendications 1 à 5, **caractérisé en ce que** le produit en alliage en laiton spécial est une pièce forgée à chaud et présente une matrice à solution solide α-β avec une proportion de phase α de 35 % à 55 % ainsi qu'une proportion de phases intermétalliques de 2 % à 5 %.

8. Produit en alliage en laiton spécial selon la revendication 7, **caractérisé en ce que** le produit en alliage en laiton spécial est un produit fortement sollicité au niveau du glissement, notamment un patin ou un coussinet.
